# EUROPEAN PATENT APPLICATION

(11) **EP 4 779 981 A1**
(43) Date of publication of application: **22.07.2026**
(21) Application number: 24865873.4
(22) Date of filing: 12.09.2024
(51) Int. Cl.: H04N 19/129, H04N 19/119, H04N 19/70, H04N 19/176

(54) **IMAGE ENCODING/DECODING METHOD AND DEVICE, AND RECORDING MEDIUM STORING BITSTREAM**

(30) Priority: 12.09.2023 KR 20230120945
(71) Applicant: LG Electronics Inc., Yeongdeungpo-gu Seoul 07336 (KR)
(72) Inventor: AHN, Yongjo, Seoul 06772 (KR); LIM, Jaehyun, Seoul 06772 (KR); PARK, Naeri, Seoul 06772 (KR); NAM, Junghak, Seoul 06772 (KR)
(74) Representative: Maikowski & Ninnemann Patentanwälte Partnerschaft mbB
(86) International application number: PCT/KR2024/013901
(87) International publication number: WO 2025/058434

(57) **Abstract**

An image decoding method and device according to the present disclosure may divide a current block into a plurality of sub-blocks on the basis of one of the pre-defined types of block divisions, and decode the plurality of sub-blocks on the basis of a predetermined decoding order. Here, the decoding order may be determined on the basis of one of one or more scan order candidates, and the one or more scan order candidates may include at least one of a horizontal Z scan order and a vertical Z scan order.

## Description

### [Technical Field]

The present disclosure relates to an image encoding/decoding method and apparatus, and a recording medium storing a bitstream.

### [Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

### [Disclosure]

### [Technical Problem]

The present disclosure is to provide a method and an apparatus for using an adaptive decoding/encoding order for subblocks according to tree-based block split.

The present disclosure is to provide a method and an apparatus for efficiently signaling information/a syntax for using an adaptive decoding/encoding order.

According to the present disclosure, a method and an apparatus for using an adaptive decoding/encoding order for the top-level block units configuring one picture are provided.

### [Technical Solution]

An image decoding method and apparatus according to the present disclosure may split a current block into a plurality of subblocks based on one of pre-defined block split types and decode the plurality of subblocks based on a predetermined decoding order. Here, the decoding order may be determined based on one of one or more scan order candidates. The one or more scan order candidates may include at least one of a horizontal Z-scan order or a vertical Z-scan order.

In an image decoding method and apparatus according to the present disclosure, the decoding order may be determined based on index information indicating one of the one or more scan order candidates.

In an image decoding method and apparatus according to the present disclosure, the index information may be signaled based on information representing whether the current block is split into four subblocks.

An image decoding method and apparatus according to the present disclosure may obtain a high-level syntax regarding whether an adaptive scan order is used from a bitstream.

In an image decoding method and apparatus according to the present disclosure, the high-level syntax may be signaled in at least one of a sequence parameter set, a picture parameter set, or a picture header.

In an image decoding method and apparatus according to the present disclosure, the index information may be signaled based on the high-level syntax.

In an image decoding method and apparatus according to the present disclosure, a current block including the current block may be split into a plurality of top-level block units, and the plurality of top-level block units may be decoded based on a decoding order in which a raster scan order and a Z-scan order are combined.

An image encoding method and apparatus according to the present disclosure may split a current block into a plurality of subblocks based on one of pre-defined block split types and encode the plurality of subblocks based on a predetermined encoding order. Here, the encoding order may be determined based on one of one or more scan order candidates. The one or more scan order candidates may include at least one of a horizontal Z-scan order or a vertical Z-scan order.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and an apparatus for transmitting video/image information generated according to an image encoding method according to the present disclosure are provided.

### [Advantageous Effects]

According to the present disclosure, encoding efficiency may be improved by using an adaptive decoding/encoding order for subblocks obtained through tree-based block split.

According to the present disclosure, encoding efficiency may be improved by efficiently signaling a syntax for using an adaptive decoding/encoding order.

According to the present disclosure, encoding efficiency may be improved by using an adaptive decoding/encoding order for the top-level block units configuring one picture.

### [Brief Description of Drawings]

FIG. 1 shows a video/image coding system according to the present disclosure.
FIG. 2 shows a schematic block diagram of an encoding apparatus to which an embodiment of the present disclosure is applicable and encoding of video/image signals is performed.
FIG. 3 shows a schematic block diagram of a decoding apparatus to which an embodiment of the present disclosure is applicable and decoding of video/image signals is performed.
FIG. 4 illustrates an image decoding method performed by the decoding apparatus 300 as an embodiment according to the present disclosure.
FIG. 5 illustrates a decoding order according to a raster scan order for a plurality of CTUs within one picture.
FIGS. 6 and 7 illustrate an example in which an adaptive scan order is used for a plurality of CTUs within one picture.
FIG. 8 illustrates a schematic configuration of the decoding apparatus 300 that performs an image decoding method according to the present disclosure.
FIG. 9 illustrates an image encoding method performed by the encoding apparatus 200 as an embodiment according to the present disclosure.
FIG. 10 illustrates a schematic configuration of the encoding apparatus 200 that performs an image encoding method according to the present disclosure.
FIG. 11 shows an example of a contents streaming system to which embodiments of the present disclosure may be applied.

### [Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, the first component may be referred to as the second component without departing from the scope of a right of the present disclosure, and similarly, the second component may also be referred to as the first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

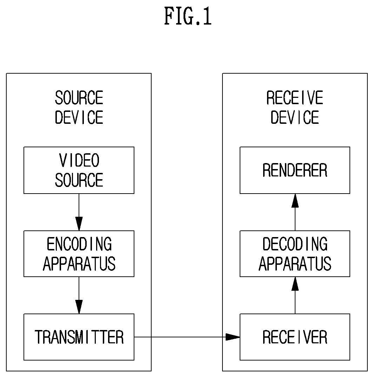

FIG. 1 shows a video/image coding system according to the present disclosure.

Referring to FIG. 1, a video/image coding system may include the first device (a source device) and the second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

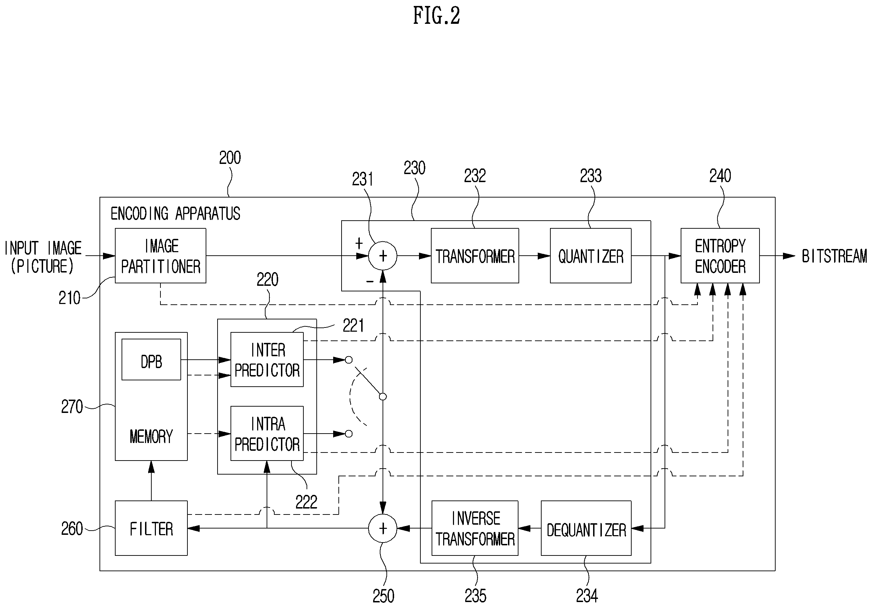

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may reorder quantized transform coefficients in a block form into a 1D vector form based on coefficient scan order, and may generate information on the quantized transform coefficients based on the quantized transform coefficients in the 1D vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

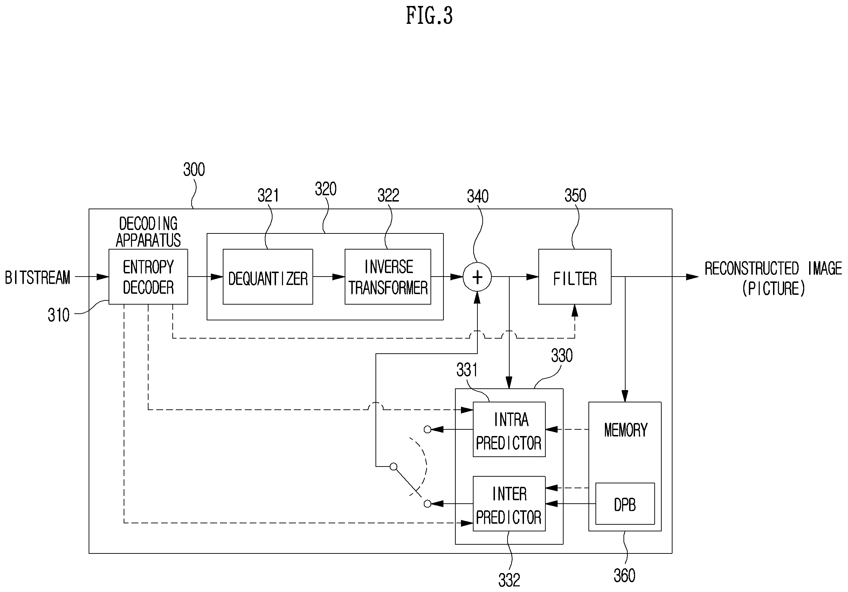

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the larget coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may reorder quantized transform coefficients into a two-dimensional block form. In this case, the reordering may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

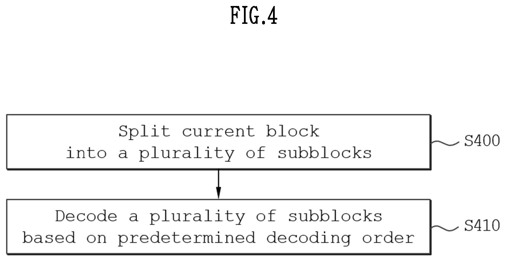

FIG. 4 illustrates an image decoding method performed by the decoding apparatus 300 as an embodiment according to the present disclosure.

Referring to FIG. 4, a current block may be split into a plurality of subblocks S400.

A current block according to the present disclosure may be a coding block or a transform block. Each of a plurality of subblocks may be a coding block or a transform block in which at least one of a width or height is smaller than that of a current block. The split depth of each subblock may be greater than that of a current block. As an example, when the split depth of a current block is N, the split depth of each subblock may be (N+1). A plurality of subblocks may be square or rectangular. At least one of a plurality of subblocks may have a geometric shape. In the present disclosure, a subblock may be replaced with a term such as a sub-block or a partition.

The current block may be split based on one or more split lines. The split lines may include at least one of a vertical line, a horizontal line or a split line having a predetermined angle. At least one of the split lines may pass through the center of a current block. Alternatively, the split line may not pass through the center of a current block.

The split may be performed based on one of the pre-defined block split types. The block split types may include at least one of quad split, binary split or ternary split. The quad split may be a type that splits one coding block into four subblocks. Here, the width and height of four subblocks may be half the width and height of a coding block, respectively. The binary split may be a type that splits one coding block into two subblocks. The ternary split may be a type that splits one coding block into three subblocks. An image decoding method according to the present disclosure may use tree-based block split.

Split information for the block split may be signaled. Split information may include at least one of information representing whether split is performed, information representing whether one block is split into four subblocks, information representing whether one block is split into two subblocks or information representing a split direction.

As an example, information (split_cu_flag) representing whether a current block is split may be signaled. When split_cu_flag is false (or, 0), it may represent that a current block is not split. In this case, decoding may be performed according to the shape and/or size of a current block without additional block split for a current block. On the other hand, when split_cu_flag is true (or, 1), it may represent that a current block is split into subblocks by using additional block split. The additional block split may be performed based on quad split, binary split or ternary split. Alternatively, additional block split may be performed based on asymmetric binary split.

When split_cu_flag is true, split_qt_flag may be signaled during a signaling process for the type of the additional block split of a current block. split_qt_flag may represent whether a current block is split based on a quad split. When split_qt_flag is true (or, 1), a current block may be split into four subblocks. On the other hand, when split_qt_flag is false (or, 0), a current block may not be split into four subblocks, and a current block may be split into subblocks by using another block split. However, only when a current block satisfies all conditions for allowing quad split, split_qt_flag may be signaled, and otherwise, split_qt_flag may be set as false.

When split_qt_flag is false, information for block split other than quad split may be signaled for a current block. At least one of mtt_split_cu_vertical_flag or mtt_split_cu_binary_flag may be signaled. mtt_split_cu_vertical_flag may represent the split direction of a current block. When mtt_split_cu_vertical_flag is true (or, 1), a current block may be split vertically, and when mtt_split_cu_vertical_flag is false (or, 0), a current block may be split horizontally. mtt_split_cu_binary_flag may represent whether a current block is split based on binary split. When mtt_split_cu_binary_flag is true (or, 1), a current block may be split into two subblocks, and when mtt_split_cu_binary_flag is false (or, 0), a current block may be split into three subblocks.

Accordingly, when both mtt_split_cu_vertical_flag and mtt_split_cu_binary_flag are true, a current block may be split vertically into two subblocks. When mtt_split_cu_vertical_flag is true and mtt_split_cu_binary_flag is false, a current block may be split vertically into three subblocks. When mtt_split_cu_vertical_flag is false and mtt_split_cu_binary_flag is true, a current block may be split horizontally into two subblocks. When both mtt_split_cu_vertical_flag and mtt_split_cu_binary_flag are false, a current block may be split horizontally into three subblocks.

A method for signaling split information described above may be applied to one coding block, which may be recursively applied to a plurality of subblocks split from one coding block.

Referring to FIG. 4, a plurality of subblocks may be decoded based on a predetermined decoding order S410.

The decoding order of subblocks within a current block may be determined based on one of one or more pre-defined scan order candidates. The one or more scan order candidates may include at least one of a horizontal Z-scan order or a vertical Z-scan order.

It is assumed that a current block is split into four subblocks based on quad split. In this case, four subblocks may be sequentially decoded in a horizontal Z-scan order. Here, a horizontal Z-scan order may refer to the order in which four subblocks obtained through quad split are decoded in the order of a top-left subblock, a top-right subblock, a bottom-left subblock and a bottom-right subblock. Alternatively, four subblocks may be sequentially decoded in a vertical Z-scan order. Here, a vertical Z-scan order may refer to the order in which four subblocks obtained through quad split are decoded in the order of a top-left subblock, a bottom-left subblock, a top-right subblock and a bottom-right subblock.

One of one or more scan order candidates available to a current block may be selectively used.

The number and/or type of one or more scan order candidates available to a current block may be derived based on the type of block split of a current block.

As an example, when a current block is split based on quad split, the number of one or more scan order candidates available to a current block may be greater than or equal to 2. On the other hand, when a current block is not split based on quad split, the number of one or more scan order candidates available to a current block may be 1. Alternatively, when a current block is split based on quad split, one or more scan order candidates available to a current block may include a horizontal Z-scan order and a vertical Z-scan order. On the other hand, when a current block is not split based on quad split, one or more scan order candidates available to a current block may include a horizontal Z-scan order, but may not include a vertical Z-scan order.

Index information indicating one of one or more scan order candidates may be explicitly signaled.

As an example, a current block may be split into four subblocks based on quad split, and index information indicating one of a horizontal Z-scan order and a vertical Z-scan order may be signaled for four subblocks.

Specifically, when a current block is split into four subblocks (i.e., when split_cu_flag is true and split_qt_flag is true), qt_scan_flag may be signaled. In other words, qt_scan_flag may be index information for selecting one of a horizontal Z-scan order and a vertical Z-scan order when a current block is split into four subblocks based on quad split.

When qt_scan_flag is true (or, 1), four subblocks may be decoded sequentially in a horizontal Z-scan order. On the other hand, when qt_scan_flag is false (or, 0), four subblocks may be decoded sequentially in a vertical Z-scan order. Conversely, when qt_scan_flag is true, four subblocks may be sequentially decoded in a vertical Z-scan order, and when qt_scan_flag is false, four subblocks may be sequentially decoded in a horizontal Z-scan order.

Tables 1 and 2 below show a syntax and a semantic corresponding to the above-described embodiment, respectively. As shown in Table 1, when split_qt_flag represents that a current block is split into four subblocks (i.e., when split_qt_flag is true), qt_scan_flag may be signaled for a current block.

**[Table 1]**

| | |
|---|---|
| coding_tree( x0, y0, cbWidth, cbHeight, qgOnY, qgOnC, cbSubdiv, eqtDepth, mttDepth, depth Offset, | **Descripto r** |
| partIdx, treeTypeCurr, modeTypeCurr ) { | |
| if( ( allowSplitBtVer \| \| allowSplitBtHor \| \| allowSplitTtVer \| \| allowSplitTtHor \| \| | |
| allowSplitQT ) && ( x0 + cbWidth <= pic_width_in_luma_samples ) | |
| && ( y0 + cbHeight <= pic_height_in_luma_samples ) | |
| **split_cu_flag** | ae(v) |
| if( cu_qp_delta_enabled_flag && qgOnY && cbSubdiv <= CuQpDeltaSubdiv ) { | |
| IsCuQpDeltaCoded = 0 | |
| CuQpDeltaVal = 0 | |
| CuQgTopLeftX = x0 | |
| CuQgTopLeftY = y0 | |
| } | |
| if( cu_chroma_qp_offset_enabled_flag && qgOnC && | |
| cbSubdiv <= CuChromaQpOffsetSubdiv ) { | |
| IsCuChromaQpOffsetCoded = 0 | |
| CuQpOffset_{Cb} = 0 | |
| CuQpOffset_{Cr} = 0 | |
| CuQpOffset_{CbCr} = 0 | |
| } | |
| if( split_cu_flag ) { | |
| if( ( allowSplitBtVer \| \| allowSplitBtHor \| \| allowSplitTtVer \| \| allowSplitTtHor ) && | |
| allowSplitQT ) | |
| **split_qt_flag** | ae(v) |
| if( split_qt_flag ) { | |
| **qt_scan_flag** | ae(v) |
| } | |
| if( ! split_qt_flag) { | |
| if( ( allowSplitBtHor \| \| allowSplitTtHor ) && ( allowSplitBtVer \| \| allowSplitTtVer ) ) | |
| **mtt**_**split_cu_vertical_flag** | ae(v) |
| if( ( allowSplitBtVer && allowSplitTtVer && mtt_split_cu_vertical_flag ) \|\| | |
| ( allowSplitBtHor && allowSplitTtHor && !mtt_split_cu_vertical_flag ) ) | |
| **mtt_split_cu_binary_flag** | ae(v) |
| } | |
| if( modeTypeCondition = = 1 ) | |
| modeType = MODE_TYPE_INTRA | |
| else if( modeTypeCondition = = 2 ) { | |
| **mode_constraint_flag** | ae(v) |
| modeType = mode_constraint_flag ? MODE_TYPE_INTRA : MODE_TYPE_INTER | |
| } else | |
| modeType = modeTypeCurr | |
| treeType = ( modeType = = MODE _TYPE_INTRA ) ? DUAL_TREE_LUMA : treeTypeCurr | |
| if( ! split_qt_flag) { | |
| if( MttSplitMode[ x0 ][ y0 ][ mttDepth ] = = SPLIT_BT_VER ) { | |
| depthOffset += ( x0 + cbWidth > pic_width_in_luma_samples ) ? 1 : 0 | |
| x1 = x0 + ( cbWidth / 2 ) | |
| coding_tree( x0, y0, cbWidth / 2, cbHeight, qgOnY, qgOnC, cbSubdiv + 1, | |
| cqtDepth, mttDepth + 1, depthOffset, 0, treeType, modeType ) | |
| if( x1 < pic_width_in_luma_samples ) | |
| coding_tree( x1, y0, cbWidth / 2, cbHeightY, qgOnY, qgOnC, cbSubdiv + 1, | |
| cqtDepth, mttDepth + 1, depthOffset, 1, treeType, modeType ) | |
| } else if( MttSplitMode[ x0 ][ y0 ][ mttDepth ] = = SPLIT_BT_HOR) { | |
| depthOffset += ( y0 + cbHeight > pic_height_in_luma_samples ) ? 1 : 0 | |
| y1 = y0 + ( cbHeight / 2 ) | |
| coding_tree( x0, y0, cbWidth, cbHeight / 2, qgOnY, qgOnC, cbSubdiv + 1, | |
| cqtDepth, mttDepth + 1, depthOffset, 0, treeType, modeType ) | |
| if( y1 < pic_height_in_luma_samples ) | |
| coding_tree( x0, y1, cbWidth, cbHeight / 2, qgOnY, qgOnC, cbSubdiv + 1, | |
| cqtDepth, mttDepth + 1, depthOffset, 1, treeType, modeType ) | |
| } else if( MttSplitMode[ x0 ][ y0 ][ mttDepth ] = = SPLIT_TT_VER ) { | |
| x1 = x0 + ( cbWidth / 4 ) | |
| x2 = x0 + ( 3 * cbWidth / 4 ) | |
| qgNextOnY = qgOnY && ( cbSubdiv + 2 <= CuQpDeltaSubdiv ) | |
| qgNextOnC = qgOnC && ( cbSubdiv + 2 <= CuChromaQpOffsetSubdiv ) | |
| coding_tree( x0, y0, cbWidth / 4, cbHeight, qgNextOnY, qgNextOnC, cbSubdiv + 2, | |
| cqtDepth, mttDepth + 1, depthOffset, 0, treeType, modeType ) | |
| coding_tree( x1, y0, cbWidth / 2, cbHeight, qgNextOnY, qgNextOnC, cbSubdiv + 1, | |
| cqtDepth, mttDepth + 1, depthOffset, 1, treeType, modeType ) | |
| coding_tree( x2, y0, cbWidth / 4, cbHeight, qgNextOnY, qgNextOnC, cbSubdiv + 2, | |
| cqtDepth, mttDepth + 1, depthOffset, 2, treeType, modeType ) | |
| } else { /* SPLIT_TT_HOR */ | |
| y1 = y0 + ( cbHeight / 4 ) | |
| y2 = y0 + ( 3 * cbHeight / 4 ) | |
| qgNextOnY = qgOnY && ( cbSubdiv + 2 <= CuQpDeltaSubdiv ) | |
| qgNextOnC = qgOnC && ( cbSubdiv + 2 <= CuChromaQpOffsetSubdiv ) | |
| coding_tree( x0, y0, cbWidth, cbheight / 4, qgNextOnY, qgNextOnC, cbSubdiv + 2, | |
| cqtDepth, mttDepth + 1, depthOffset, 0, treeType, modeType ) | |
| coding_tree( x0, y1, cbWidth, cbheight / 2, qgNextOnY, qgNextOnC, cbSubdiv + 1, | |
| cqtDepth, mttDepth + 1, depthOffset, 1, treeType, modeType ) | |
| coding_tree( x0, y2, cbWidth, cbheight / 4, qgNextOnY, qgNextOnC, cbSubdiv + 2, | |
| cqtDepth, mttDepth + 1, depthOffset, 2, treeType, modeType ) | |
| } | |
| } else { | |
| x1 = x0 + ( cbWidth / 2 ) | |
| y1 = y0 + ( cbHeight / 2 ) | |
| coding_tree( x0, y0, cbWidth / 2, cbHeight / 2, qgOnY, qgOnC, cbSubdiv + 2, | |
| cqtDepth + 1, 0, 0, 0, treeType, modeType ) | |
| if( x1 < pic_width_in_luma_samples ) | |
| coding_tree( x1, y0, cbWidth / 2, cbHeight / 2, qgOnY, qgOnC, cbSubdiv + 2, | |
| cqtDepth + 1, 0, 0, 1, treeType, modeType ) | |
| if( y1 < pic_height_in_luma_samples ) | |
| coding_tree( x0, y1, cbWidth / 2, cbHeight / 2, qgOnY, qgOnC, cbSubdiv + 2, | |
| cqtDepth + 1, 0, 0, 2, treeType, modeType ) | |
| if( y1 < pic_height_in_luma_samples && x1 < pic_width_in_luma_samples ) | |
| coding_tree( x1, y1, cbWidth / 2, cbHeight / 2, qgOnY, qgOnC, cbSubdiv + 2, | |
| cqtDepth + 1, 0, 0, 3, treeType, modeType ) | |
| } | |
| if( modeTypeCur = = MODE _TYPE_ALL && modeType = = MODE _TYPE_INTRA ) | |
| coding_tree( x0, y0, cbWidth, cbHeight, 0, qgOnC, cbSubdiv, eqtDepth, mttDepth, 0, 0, | |
| DUAL_TREE_CHROMA, modeType ) | |
| } else | |
| coding_unit( x0, y0, cbWidth, cbHeight, eqtDepth, treeTypeCurr , modeTypeCurr ) | |
| } | |

**[Table 2]**

| |
|---|
| **qt_scan_flag** specifies whether four coding units which are split into quadtree partitioning are scanned with horizontal Z-scan order or vertical Z-scan order. qt_scan_flag equal to 1 specifies the coding units are scanned with horizontal Z-scan order. qt_scan_flag equal to 0 specifies the coding unists are scanned with vertical Z-scan order. |

Subblocks within a current block may be decoded in a decoding order according to the selected scan order candidate.

As an example, the decoding process of each subblock may further include a block split process for a corresponding subblock. Split information for the block split of a corresponding subblock may be additionally signaled, which is the same as a method for signaling split information described above.

Whether the above-described adaptive scan order is used/available may be signaled by using a high-level syntax.

As an example, whether an adaptive scan order is used/available may be signaled through a sequence parameter set (SPS). Table 3 is a syntax table for signaling whether an adaptive scan order is used/available through a sequence parameter set. In Table 3, sps_adaptive_scan_order_flag may represent whether an adaptive scan order is used/available within a sequence currently using sps_seq_parameter_set_id among a plurality of sequences belonging to a bitstream. For example, when sps_adaptive_scan_order_flag is true (or, 1), an adaptive scan order may be used or available in a sequence currently using sps_seq_parameter_set_id among a plurality of sequences belonging to a bitstream. On the other hand, when sps_adaptive_scan_order_flag is false (or, 0), an adaptive scan order may not be used or available in a sequence currently using sps_seq_parameter_set_id among a plurality of sequences belonging to a bitstream.

**[Table 3]**

| | |
|---|---|
| seq_parameter_set_rbsp( ) { | **Descriptor** |
| **sps_seq_parameter_set_id** | u(4) |
| **sps_video_parameter_set_id** | u(4) |
| ... | |
| **sps_adaptive_scan_order_flag** | u(1) |
| ... | |
| rbsp_trailing_bits() | |
| } | |

As an example, whether an adaptive scan order is used/available may be signaled through a picture parameter set (PPS). Table 4 is a syntax table for signaling whether an adaptive scan order is used/available through a picture parameter set. In Table 4, pps_adaptive_scan_order_flag may represent whether an adaptive scan order is used/available within a picture currently using pps_seq_parameter_set_id among a plurality of pictures belonging to a bitstream. For example, when pps_adaptive_scan_order_flag is true (or, 1), an adaptive scan order may be used or available in a picture currently using pps_seq_parameter_set_id among a plurality of pictures belonging to a bitstream. On the other hand, when pps_adaptive_scan_order_flag is false (or, 0), an adaptive scan order may not be used or available in a picture currently using pps_seq_parameter_set_id among a plurality of pictures belonging to a bitstream.

**[Table 4]**

| | |
|---|---|
| pic_parameter_set_rbsp( ) { | **Descriptor** |
| **pps_pic_parameter_set_id** | ue(v) |
| **pps_seq_parameter_set_id** | u(4) |
| **...** | |
| **pps_adaptive_scan_order_flag** | u(1) |
| ... | |
| rbsp_trailing_bits( ) | |
| } | |

As an example, whether an adaptive scan order is used/available may be signaled through a picture header (PH). Table 5 is a syntax table for signaling whether an adaptive scan order is used/available through a picture header. In Table 5, ph_adaptive_scan_order_flag may represent whether an adaptive scan order is used/available in a current picture. For example, when ph_adaptive_scan_order_flag is true (or, 1), an adaptive scan order may be used or available in a current picture. On the other hand, when ph_adaptive_scan_order_flag is false (or, 0), an adaptive scan order may not be used or available in a current picture.

ph_adaptive_scan_order_flag may be signaled when sps_adaptive_scan_order_flag is true. When sps_adaptive_scan_order is false, ph_adaptive_scan_order_flag may not be signaled and may be derived as false.

**[Table 5]**

| | |
|---|---|
| picture_header_structure( ) { | **Descriptor** |
| ... | |
| **ph_pic_parameter_set_id** | ue(v) |
| **ph_pic_order_cnt_lsb** | u(v) |
| ... | |
| if( sps_adaptive_scan_order_flag ) { | |
| **ph_adaptive_scan_order_flag** | u(1) |
| } | |
| ... | |
| rbsp_trailing_bits( ) | |
| } | |

A high-level syntax for signaling whether the adaptive scan order is used/available is not limited to an SPS, a PPS or a PH. As an example, the high-level syntax may be signaled at the level of at least one of a tile, a slice or a CTU row/column.

Index information (qt_scan_flag) indicating one of one or more scan order candidates described above may be signaled based on at least one of the high-level syntaxes.

As an example, when sps_adaptive_scan_order_flag is true, qt_scan_flag may be signaled through a bitstream, and otherwise, qt_scan_flag may not be signaled through a bitstream. When pps_adaptive_scan_order_flag is true, qt_scan_flag may be signaled through a bitstream, and otherwise, qt_scan_flag may not be signaled through a bitstream. When ph_adaptive_scan_order_flag is true, qt_scan_flag may be signaled through a bitstream, and otherwise, qt_scan_flag may not be signaled through a bitstream.

qt_scan_flag may be signaled based on split_qt_flag representing whether a current block is split based on quad split.

As an example, when split_qt_flag is true, qt_scan_flag may be signaled through a bitstream, and otherwise, qt_scan_flag may not be signaled through a bitstream.

qt_scan_flag may be signaled based on at least one of the above-described high-level syntaxes and split_qt_flag for a current block.

As an example, when split_qt_flag is true and sps_adaptive_scan_order_flag is true, qt_scan_flag may be signaled through a bitstream. On the other hand, when at least one of split_qt_flag and sps_adaptive_scan_order_flag is false, qt_scan_flag may not be signaled through a bitstream.

Alternatively, when split_qt_flag is true and pps_adaptive_scan_order_flag is true, qt_scan_flag may be signaled through a bitstream. On the other hand, when at least one of split_qt_flag and pps_adaptive_scan_order_flag is false, qt_scan_flag may not be signaled through a bitstream.

Alternatively, as shown in Table 6, when split_qt_flag is true and ph_adaptive_scan_order_flag is true, qt_scan_flag may be signaled through a bitstream. On the other hand, when at least one of split_qt_flag and ph_adaptive_scan_order_flag is false, qt_scan_flag may not be signaled through a bitstream.

**[Table 6]**

| | |
|---|---|
| coding_tree( x0, y0, cbWidth, cbHeight, qgOnY, qgOnC, cbSubdiv, eqtDepth, mttDepth, depth Offset, partIdx, treeTypeCurr, modeTypeCurr ) { | **Descripto r** |
| ... | |
| if( split_cu_flag ) { | |
| if( ( allowSplitBtVer \| \| allowSplitBtHor \| \| allowSplitTtVer \| \| allowSplitTtHor ) | |
| && allowSplitQT ) | |
| **split_qt_flag** | ae(v) |
| if( split_qt_flag && ph_adaptive_scan_order_flag ) { | |
| **qt_scan_flag** | ae(v) |
| } | |
| ... | |
| } | |
| } | |

A syntax representing whether an adaptive scan order is used in a coding unit may be additionally signaled. A syntax representing whether an adaptive scan order is used in a coding unit may be expressed as cu_adaptive_scan_order_flag.

As an example, when cu_adaptive_scan_order_flag is true (or, 1), an adaptive scan order may be used for a current picture. In this case, index information indicating one of one or more scan order candidates described above may be signaled. On the other hand, when cu_adaptive_scan_order_flag is false (or, 0), an adaptive scan order may not be used for a current picture. In this case, a default scan order (e.g., a horizontal Z-scan order) may be used for a current block. When cu_adaptive_scan_order_flag is not signaled, cu_adaptive_scan_order_flag may be derived as false.

cu_adaptive_scan_order_flag may be signaled based on at least one of the above-described high-level syntaxes.

As an example, when sps_adaptive_scan_order_flag is true, cu_adaptive_scan_order_flag may be signaled through a bitstream, and otherwise, cu_adaptive_scan_order_flag may not be signaled through a bitstream. When pps_adaptive_scan_order_flag is true, cu_adaptive_scan_order_flag may be signaled through a bitstream, and otherwise, cu_adaptive_scan_order_flag may not be signaled through a bitstream. When ph_adaptive_scan_order_flag is true, cu_adaptive_scan_order_flag may be signaled through a bitstream, and otherwise, cu_adaptive_scan_order_flag may not be signaled through a bitstream.

cu_adaptive_scan_order_flag may be signaled based on split_qt_flag representing whether a current block is split based on quad split.

As an example, when split_qt_flag is true, cu_adaptive_scan_order_flag may be signaled through a bitstream, and otherwise, cu_adaptive_scan_order_flag may not be signaled through a bitstream.

cu_adaptive_scan_order_flag may be signaled based on at least one of the above-described high-level syntaxes and split_qt_flag for a current block.

As an example, when split_qt_flag is true and sps_adaptive_scan_order_flag is true, cu_adaptive_scan_order_flag may be signaled through a bitstream. On the other hand, when at least one of split_qt_flag and sps_adaptive_scan_order_flag is false, cu_adaptive_scan_order_flag may not be signaled through a bitstream. When split_qt_flag is true and pps_adaptive_scan_order_flag is true, cu_adaptive_scan_order_flag may be signaled through a bitstream. On the other hand, when at least one of split_qt_flag and pps_adaptive_scan_order_flag is false, cu_adaptive_scan_order_flag may not be signaled through a bitstream. When split_qt_flag is true and ph_adaptive_scan_order_flag is true, cu_adaptive_scan_order_flag may be signaled through a bitstream. On the other hand, when at least one of split_qt_flag and ph_adaptive_scan_order_flag is false, cu_adaptive_scan_order_flag may not be signaled through a bitstream.

As described above, the decoding process of each subblock may include a block split process for a corresponding subblock. In this case, at least one of qt_scan_flag or cu_adaptive_scan_order_flag may be signaled along with split information for block split at the node of a corresponding subblock. Accordingly, when a current block is split into a plurality of first subblocks and the first subblock is split into a plurality of second subblocks, the decoding order of the first subblocks within a current block may be different from the decoding order of the second subblocks within the first subblock. Here, when the split depth of a current block is N, the split depth of the first subblock may be (N+1) and the split depth of the second subblock may be (N+2).

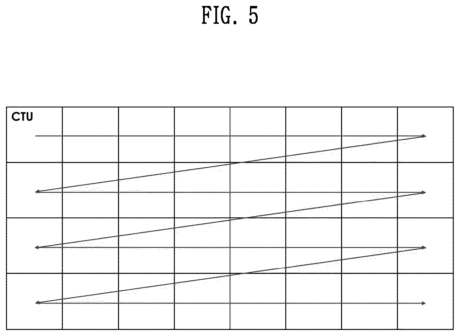

A current picture may be split into a plurality of top-level block units (or, coding tree units, CTUs) and an adaptive decoding order may be applied to a plurality of top-level block units, which will be described in detail by referring to FIGS. 5 to 7 below.

FIG. 5 illustrates a decoding order according to a raster scan order for a plurality of CTUs within one picture.

As illustrated in FIG. 5, decoding is performed in order from the first CTU column to the last CTU column within one picture, and decoding may be performed in order from the leftmost CTU to the rightmost CTU within each CTU column. It may be defined as a decoding order according to a raster scan order. In other words, it may refer to a scan order that decodes all CTUs included in the first CTU column, and then sequentially decodes CTUs included in the second CTU column.

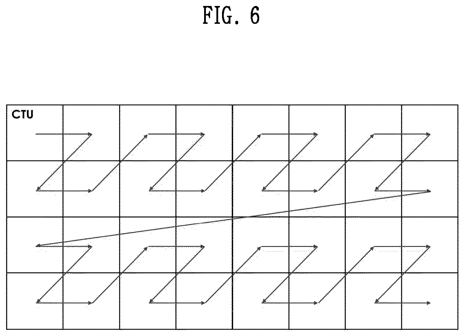

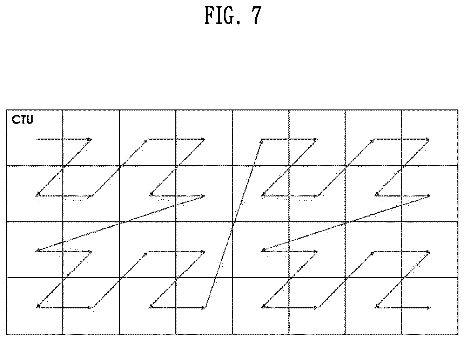

FIGS. 6 and 7 illustrate an example in which an adaptive scan order is used for a plurality of CTUs within one picture. Decoding order in which a Z-scan order and a raster scan order are combined may be used within the number of pre-defined CTU columns.

FIG. 6 illustrates a case in which the number of pre-defined CTU columns is 2. Referring to FIG. 6, the first CTU and second CTU of the first CTU column may be sequentially decoded, and then the first CTU and second CTU of the second CTU column may be sequentially decoded in a Z-scan order. Thereafter, the third CTU and fourth CTU of the first CTU column may be sequentially decoded in a raster scan order, and then the third CTU and fourth CTU of the second CTU column may be sequentially decoded in a Z-scan order.

FIG. 7 illustrates a case in which the number of pre-defined CTU columns is 4. Referring to FIG. 7, decoding may be performed in a Z-scan order in the unit of four CTU columns within a picture, and then decoding may be performed again in a Z-scan order in the unit of four CTU columns from a CTU column located on a raster scan order.

As such, encoding efficiency may be improved by using a decoding order in which a Z-scan order and a raster scan order are combined within the number of pre-defined CTU columns.

The number of pre-defined CTU columns may be an integer which is a multiple of 2. In addition, the number of pre-defined CTU columns may be a fixed value which is pre-defined for an encoding apparatus and a decoding apparatus. Alternatively, information for specifying the number of CTU columns may be separately signaled. The information may be signaled at the level of at least one of a sequence parameter set, a picture parameter set, a picture header or a slice header. As an example, information signaled to use a decoding order in which a Z-scan order and a raster scan order are combined may be as shown in Table 7 below.

**[Table 7]**

| | |
|---|---|
| seq_parameter_set_rbsp( ) { | **Descriptor** |
| **sps_seq_parameter_set_id** | u(4) |
| **sps_video_parameter_set_id** | u(4) |
| ... | |
| **sps_adaptive_ctu_scan_order_flag** | u(1) |
| if ( sps_adaptive_ctu_scan_order_flag ) { | |
| **sps_num_of_scan_lines** | u(v) |
| } | |
| ... | |
| rbsp_trailing_bits( ) | |
| } | |

According to Table 7, a flag representing whether an adaptive scan order in the unit of a CTU is used within a sequence currently using sps_seq_parameter_set_id among a plurality of sequences within a bitstream may be signaled. A corresponding flag may be expressed as sps_adaptive_ctu_scan_order_flag.

When sps_adpative_ctu_scan_order_flag is true, an adaptive scan order in the unit of a CTU may be used in a sequence currently using sps_seq_parameter_id among a plurality of sequences within a bitstream. On the other hand, when sps_adpative_ctu_scan_order_flag is false, an adaptive scan order in the unit of a CTU may not be used in a sequence currently using sps_seq_parameter_id among a plurality of sequences within a bitstream.

Only when sps_adaptive_ctu_scan_order_flag is true, information (sps_num_of_scan_lines) regarding the number of CTU columns using an adaptive scan order in the unit of a CTU in a Z-scan order in a corresponding sequence may be explicitly signaled. The number of CTU columns using an adaptive scan order may be expressed as an integer value that is a multiple of 2. As an example, when the value of sps_num_of_scan_lines is N, the number of CTU columns using an adaptive scan order may be derived as (2*N). Alternatively, when the value of sps_num_of_scan_lines is N, the number of CTU columns using an adaptive scan order may be derived as 2^{N}.

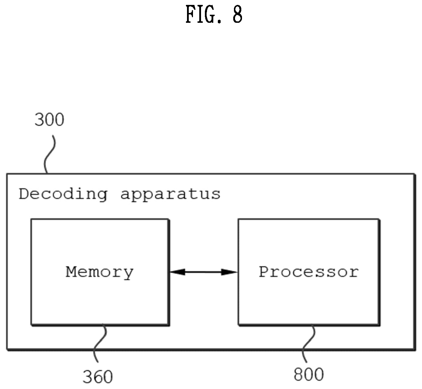

FIG. 8 illustrates a schematic configuration of the decoding apparatus 300 that performs an image decoding method according to the present disclosure.

Referring to FIG. 8, the decoding apparatus 300 may include the memory 360 and at least one processor 800.

The processor 800 may split a current block into a plurality of subblocks. The split may be performed based on one of the pre-defined block split types. The block split types may include at least one of quad split, binary split or ternary split. The binary split may include at least one of symmetric binary split or asymmetric binary split. For this purpose, the processor 800 may obtain split information indicating one of the block split types from a bitstream, which is the same as described by referring to FIG. 4. The processor 800 may use tree-based block split.

The processor 800 may decode a plurality of subblocks based on a predetermined decoding order. The decoding order of subblocks within a current block may be determined based on one of one or more pre-defined scan order candidates, which is the same as described by referring to FIG. 4.

The processor 800 may determine whether adaptive scan order is used/available based on a high-level syntax. As an example, a high-level syntax may be signaled at the level of at least one of an SPS, a PPS or a PH, which is the same as described by referring to FIG. 4. However, it is not limited thereto, and a high-level syntax may be signaled at the level of at least one of a tile, a slice and/or a CTU row/column.

In addition, as described by referring to FIG. 4, the processor 800 may obtain index information (qt_scan_flag) indicating one of one or more scan order candidates described above from a bitstream based on at least one of the high-level syntaxes. Alternatively, the processor 800 may obtain qt_scan_flag from a bitstream based on split_qt_flag representing whether a current block is split based on quad split. Alternatively, the processor 800 may obtain qt_scan_flag from a bitstream based on at least one of the above-described high-level syntaxes and split_qt_flag for a current block.

The processor 800 may obtain a syntax (cu_adaptive_scan_order_flag) representing whether an adaptive scan order is used in a coding unit from a bitstream, which is the same as described by referring to FIG. 4.

The processor 800 may split a current picture into a plurality of top-level block units (or, coding tree units, CTUs) and decode a plurality of top-level block units based on adaptive decoding order. An adaptive decoding order for a plurality of top-level block units is the same as described by referring to FIGS. 5 to 7.

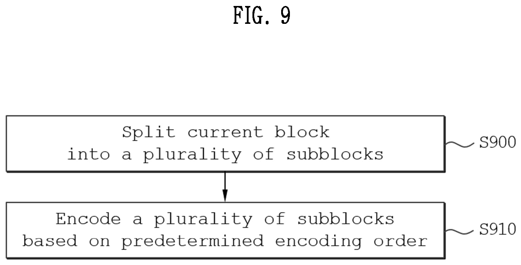

FIG. 9 illustrates an image encoding method performed by the encoding apparatus 200 as an embodiment according to the present disclosure.

Referring to FIG. 9, a current block may be split into a plurality of subblocks S900.

The split may be performed based on one of the pre-defined block split types. The block split types may include at least one of quad split, binary split or ternary split. Here, binary split may include at least one of symmetric binary split or asymmetric binary split. An image encoding method according to the present disclosure may use tree-based block split.

Split information for indicating one of the block split types may be encoded and signaled, and the signaling method of split information is the same as described by referring to FIG. 4.

Referring to FIG. 9, a plurality of subblocks may be encoded based on predetermined encoding order S910.

The encoding order of subblocks within a current block may be determined based on one of one or more pre-defined scan order candidates. Here, one or more scan order candidates may include at least one of a horizontal Z-scan order or a vertical Z-scan order.

One of one or more scan order candidates available to a current block may be selectively used. The number and/or type of one or more scan order candidates available to a current block may be determined based on the type of block split of a current block.

Index information indicating any one scan order candidate selected among one or more scan order candidates may be encoded and signaled. The signaling method of the index information is the same as described by referring to FIG. 4.

Subblocks within a current block may be encoded in an encoding order according to the selected scan order candidate. As an example, the encoding process of each subblock may further include a block split process for a corresponding subblock. Split information for the block split of a corresponding subblock may be additionally encoded and signaled, which is the same as a method for signaling split information described above.

A high-level syntax regarding whether the above-described adaptive scan order is used/available may be encoded and signaled. The high-level syntax is the same as described by referring to FIG. 4.

Index information (qt_scan_flag) indicating one of one or more scan order candidates described above may be encoded and signaled based on at least one of the high-level syntaxes. Alternatively, qt_scan_flag may be encoded and signaled based on split_qt_flag representing whether a current block is split based on quad split. Alternatively, qt_scan_flag may be encoded and signaled based on at least one of the above-described high-level syntaxes and split_qt_flag for a current block.

A syntax (cu_adaptive_scan_order_flag) for determining and representing whether an adaptive scan order is used in a coding unit may be additionally encoded and signaled.

As an example, when it is determined that an adaptive scan order is used for a current block, cu_adaptive_scan_order_flag may be encoded as true (or 1). When cu_adaptive_scan_order_flag is true, index information indicating one of one or more scan order candidates may be encoded and signaled. On the other hand, when it is determined that an adaptive scan order is not used for a current block, cu_adaptive_scan_order_flag may be encoded as false (or 0). In this case, an encoding order for a current block may be derived as a default scan order (e.g., a horizontal Z-scan order). When cu_adaptive_scan_order_flag is not encoded, cu_adaptive_scan_order_flag may be derived as false.

cu_adaptive_scan_order_flag may be encoded in a bitstream based on at least one of the above-described high-level syntaxes.

As an example, when sps_adaptive_scan_order_flag is true, cu_adaptive_scan_order_flag may be encoded in a bitstream, and otherwise, cu_adaptive_scan_order_flag may not be encoded in a bitstream. When pps_adaptive_scan_order_flag is true, cu_adaptive_scan_order_flag may be encoded in a bitstream, and otherwise, cu_adaptive_scan_order_flag may not be encoded in a bitstream. When ph_adaptive_scan_order_flag is true, cu_adaptive_scan_order_flag may be encoded in a bitstream, and otherwise, cu_adaptive_scan_order_flag may not be encoded in a bitstream.

cu_adaptive_scan_order_flag may be encoded based on split_qt_flag representing whether a current block is split based on quad split.

As an example, when split_qt_flag is true, cu_adaptive_scan_order_flag may be encoded in a bitstream, and otherwise, cu_adaptive_scan_order_flag may not be encoded in a bitstream.

cu_adaptive_scan_order_flag may be encoded based on at least one of the above-described high-level syntaxes and split_qt_flag for a current block.

As an example, when split_qt_flag is true and sps_adaptive_scan_order_flag is true, cu_adaptive_scan_order_flag may be encoded in a bitstream. On the other hand, when at least one of split_qt_flag and sps_adaptive_scan_order_flag is false, cu_adaptive_scan_order_flag may not be encoded in a bitstream. When split_qt_flag is true and pps_adaptive_scan_order_flag is true, cu_adaptive_scan_order_flag may be encoded in a bitstream. On the other hand, when at least one of split_qt_flag and pps_adaptive_scan_order_flag is false, cu_adaptive_scan_order_flag may not be encoded in a bitstream. When split_qt_flag is true and ph_adaptive_scan_order_flag is true, cu_adaptive_scan_order_flag may be encoded in a bitstream. On the other hand, when at least one of split_qt_flag and ph_adaptive_scan_order_flag is false, cu_adaptive_scan_order_flag may not be encoded in a bitstream.

As described above, the encoding process of each subblock may include a block split process for a corresponding subblock. In this case, at least one of qt_scan_flag or cu_adaptive_scan_order_flag may be encoded along with split information for block split at the node of a corresponding subblock. Accordingly, when a current block is split into a plurality of first subblocks and the first subblock is split into a plurality of second subblocks, the encoding order of the first subblocks within a current block may be different from the encoding order of the second subblocks within the first subblock. Here, when the split depth of a current block is N, the split depth of the first subblock may be (N+1) and the split depth of the second subblock may be (N+2).

A current picture may be split into a plurality of top-level block units (or, coding tree units, CTUs) and an adaptive encoding order may be applied to a plurality of top-level block units. Since an adaptive decoding order discussed by referring to FIGS. 5 to 7 may be equally applied to an adaptive encoding order, an overlapping description will be omitted.

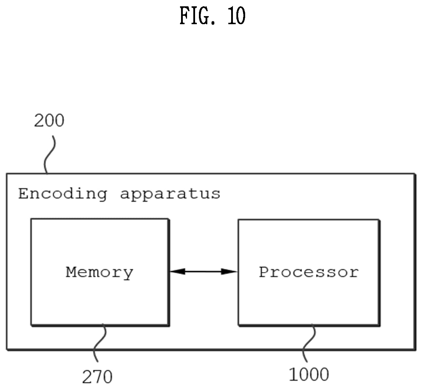

FIG. 10 illustrates a schematic configuration of the encoding apparatus 200 that performs an image encoding method according to the present disclosure.

Referring to FIG. 10, the encoding apparatus 200 may include the memory 270 and at least one processor 1000.

The processor 1000 may split a current block into a plurality of subblocks. The split may be performed based on one of the pre-defined block split types. The block split types may include at least one of quad split, binary split or ternary split, and binary split may include at least one of symmetric binary split or asymmetric binary split. The processor 1000 may encode split information for indicating one of the block split types. The processor 1000 may use tree-based block split.

The processor 1000 may encode a plurality of subblocks based on a predetermined encoding order. The encoding order of subblocks within a current block may be determined based on one of one or more pre-defined scan order candidates, which is the same as described by referring to FIG. 9.

The processor 1000 may determine whether an adaptive scan order is used/available, and may encode a high-level syntax based on a determination thereof. As an example, a high-level syntax may be encoded at the level of at least one of an SPS, a PPS or a PH, which is the same as described by referring to FIG. 4. However, it is not limited thereto, and a high-level syntax may be encoded at the level of at least one of a tile, a slice and/or a CTU row/column.

The processor 1000 may encode index information (qt_scan_flag) indicating one of one or more scan order candidates described above in a bitstream based on at least one of the high-level syntaxes. Alternatively, the processor 1000 may encode qt_scan_flag in a bitstream based on split_qt_flag representing whether a current block is split based on quad split. Alternatively, the processor 1000 may also encode qt_scan_flag in a bitstream based on at least one of the above-described high-level syntaxes and split_qt_flag for a current block.

The processor 1000 may additionally encode a syntax (cu_adaptive_scan_order_flag) representing whether an adaptive scan order is used in a coding unit in a bitstream, which is the same as described by referring to FIG. 9.

The processor 1000 may split a current picture into a plurality of top-level block units (or, coding tree units, CTUs) and encode a plurality of top-level block units based on an adaptive decoding order. Since an adaptive decoding order discussed by referring to FIGS. 5 to 7 may be equally applied to an adaptive encoding order, an overlapping description will be omitted.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

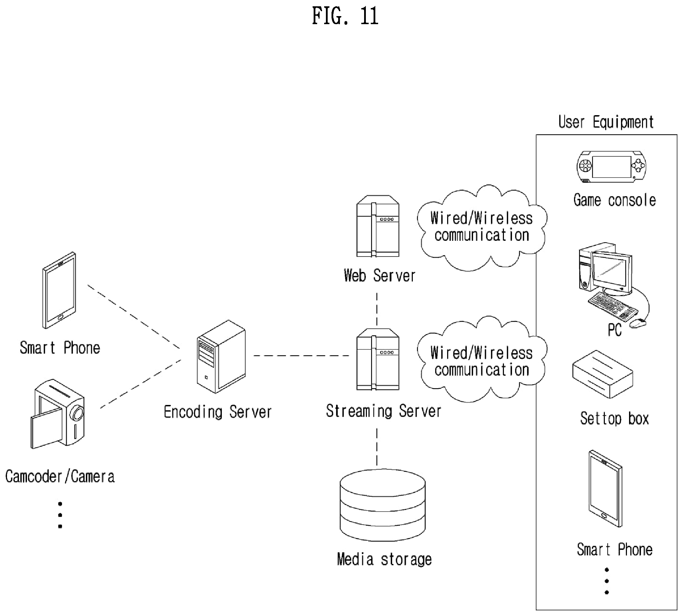

FIG. 11 shows an example of a contents streaming system to which embodiments of the present disclosure may be applied.

Referring to FIG. 11, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

## Claims

1. A method, comprising:
splitting a current block into a plurality of subblocks based on one of pre-defined block split types; and
decoding the plurality of subblocks based on a predetermined decoding order,
wherein the decoding order is determined based on one of one or more scan order candidates, and
wherein the one or more scan order candidates include at least one of a horizontal Z-scan order or a vertical Z-scan order.

2. The method of claim 1, wherein the decoding order is determined based on index information indicating one of the one or more scan order candidates.

3. The method of claim 2, wherein the index information is signaled based on information representing whether the current block is split into four subblocks.

4. The method of claim 3, wherein the method further comprises obtaining a high-level syntax regarding whether an adaptive scan order is used from a bitstream.

5. The method of claim 4, wherein the high-level syntax is signaled in at least one of a sequence parameter set, a picture parameter set, or a picture header.

6. The method of claim 5, wherein the index information is signaled based on the high-level syntax.

7. The method of claim 1, wherein a current block including the current block is split into a plurality of top-level block units, and
wherein the plurality of top-level block units are decoded based on a decoding order in which a raster scan order and a Z-scan order are combined.

8. A method, comprising:
splitting a current block into a plurality of subblocks based on one of pre-defined block split types; and
encoding the plurality of subblocks based on a predetermined encoding order,
wherein the encoding order is determined based on one of one or more scan order candidates, and
wherein the one or more scan order candidates include at least one of a horizontal Z-scan order or a vertical Z-scan order.

9. A computer-readable storage medium storing a bitstream generated by the method according to claim 8.

10. A method, comprising:
obtaining a bitstream for image information, wherein the bitstream is generated based on splitting a current block into a plurality of subblocks based on one of pre-defined block split types and encoding the plurality of subblocks based on a predetermined encoding order; and
transmitting data including the bitstream,
wherein the encoding order is determined based on one of one or more scan order candidates, and
wherein the one or more scan order candidates include at least one of a horizontal Z-scan order or a vertical Z-scan order.
